# EUROPÄISCHE PATENTSCHRIFT

(11) **EP 3 561 970 B1**
(45) Veröffentlichungstag und Bekanntmachung des Hinweises auf die Patenterteilung: **19.07.2023**
(21) Anmeldenummer: 18169531.3
(22) Anmeldetag: 26.04.2018
(51) Int. Cl.: H01R 43/052, H01R 43/28

(54) **KABELENDEHALTEVORRICHTUNG ZUM HALTEN EINES KABELENDES UND VERFAHREN ZUM SEINEM POSITIONIEREN**
CABLE END HOLDER FOR HOLDING A CABLE END AND METHOD FOR ITS POSITIONING
DISPOSITIF DE RETENUE DE L'EXTRÉMITÉ DE CÂBLE DESTINÉ À RETENIR UNE EXTRÉMITÉ DE CÂBLE ET PROCÉDÉ DE SON POSITIONNEMENT

(43) Veröffentlichungstag der Anmeldung: 30.10.2019
(73) Patentinhaber: KOMAX HOLDING AG, 6036 Dierikon (CH)
(72) Erfinder: VIVIROLI, Stefan, 6048 Horw (CH)
(74) Vertreter: Inventio AG

(56) Entgegenhaltungen:
- EP-A1- 2 775 573
- EP-A1- 2 937 953
- EP-A2- 0 994 538
- WO-A1-2011/004272
- US-A- 4 548 544

## Beschreibung

Die vorliegende Erfindung betrifft eine Kabelendehaltevorrichtung zum Halten eines Kabelendes eines Kabels, ein Verfahren zum Positionieren eines Kabelendes eines Kabels und eine Kabelkonfektioniermaschine zum Konfektionieren eines Kabels.

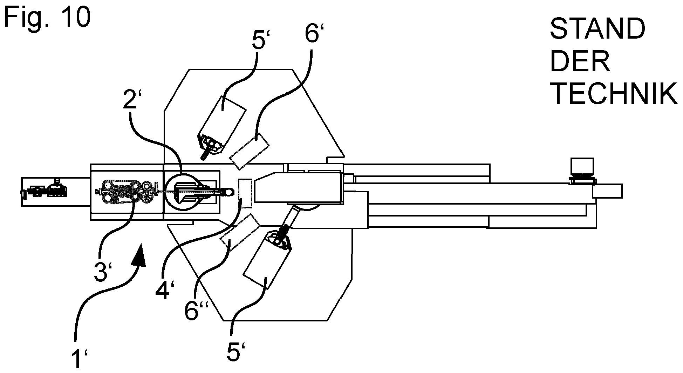

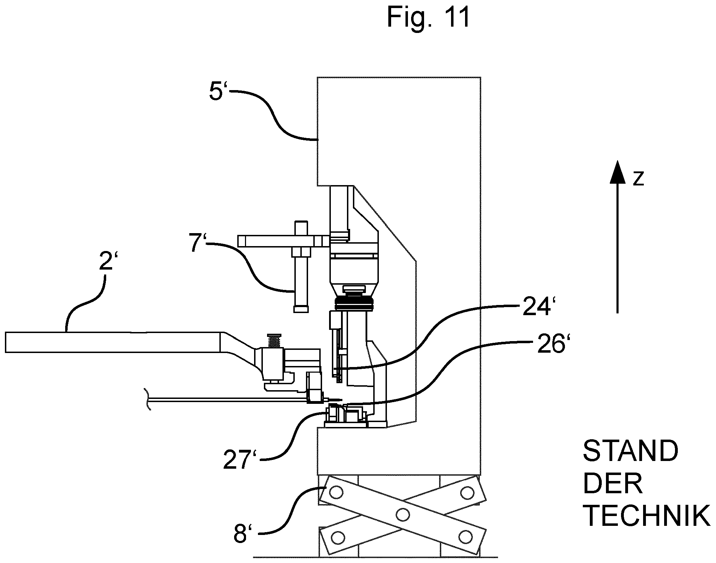

Eine Vielzahl von Kabelkonfektioniermaschinen bzw. Kabelendehaltevorrichtungen zum Halten eines Kabelendes eines Kabels sind bekannt. Fig. 10 zeigt eine Aufsicht und Fig. 11 zeigt eine Seitenansicht einer bekannten Kabelkonfektioniermaschine mit Presse 5` bzw. Crimppresse umfassend Amboss 27' und Stempel 24` zum Verbinden eines Kontaktelements 26` mit einem Kabelende, bzw. eine Kabelendehaltevorrichtung gemäß des Stands der Technik. Die Kabelkonfektioniermaschine umfasst zwei zusätzliche Stationen 6', 6", an denen das Kabel bzw. das Kabelende weiter verändert werden kann.

EP 2775573offenbart, gemäss dem Oberbegriff des Anspruchs 1, eine Kabelendehaltevorrichtung zum Halten eines Kabelendes eines Kabels für einen Crimp-Prozess, wobei die Kabelendehaltevorrichtung ein Kabelhalteelement zum Halten des Kabelendes und eine Höhenpositionsveränderungsvorrichtung mit zwei Hebelelementen zum Verändern der Höhenposition des Kabelhalteelements umfasst.

Kabelkonfektioniermaschinen mit Schwenkarmen, wie sie beispielsweise aus der EP 2 937 953 B1 bekannt sind, umfassen eine Kabelendehaltevorrichtung 1' zum Halten eines Kabelendes eines Kabels. Das Kabelende wird hierbei von vertikal bewegbaren Greifköpfen bzw. Halteelementen gehalten, um das Kabelende in der richtigen, vertikalen Position zum Presswerkzeug zu positionieren. Diese Greifköpfe bzw. Halteelemente sind federnd gelagert und werden über einen Stößel 7` an der Kontaktpresse synchron mit der Presse abgesenkt. Das Kabel wird von einer Kabelführung 3 ` zugeführt. Der Verarbeitungsablauf beginnt mit dem Trennen des Kabels im Messerblock 4`.

Das Kabelende, die Kabelspitze, wird auch gleich im Messerblock 4` auf einer vorgegebenen Länge abisoliert. Dabei werden Abisoliermesser soweit geschlossen, dass die Isolation genügend getrennt aber der metallische Leiter des Kabels bzw. des Kabelendes nicht beschädigt wird. Mittels eines Abzugsantriebs, der in Richtung der Kabelachse wirkt, wird der Schwenkarm 2' mit den Greifer von den Abisoliermesser weg gezogen. Die auftretenden Kräfte können mitunter 400N betragen, was im Stand der Technik durch Verstärkungen in der Greiferaufnahme bzw. in dem Halteelement abgefangen wurde, was jedoch zu einer großen Massenträgheit des Schwenkarms 2' bzw. der Kabelendehaltevorrichtung führt.

Nach dem Abisolieren wird das Kabelende zur Presse 5` hin geschwenkt. Der Schwenkarm 2' besitzt dazu einen Schwenkantrieb. Da das Kabelende bzw. die Kabelspitze respektive der Greifer bzw. das Halteelement keinen eigenen Antrieb für die Bewegung in Z-Richtung (die Höhenrichtung) besitzt, wird ein lichter Korridor geschaffen, durch den das Kabelende bzw. die Kabelspitze an die Bearbeitungspositionen gedreht bzw. geschwenkt werden kann. Die Bewegung verläuft dabei horizontal zwischen dem Stempel und den abstehenden Teilen des Kontakts auf dem Amboss. Meist wird die Abstimmung so vorgenommen, dass das Kabelende näher an den abstehenden Teilen des Kontakts als am Stempel ist.

Es ist eine Vielzahl von unterschiedlichen Presswerkzeugen bekannt, die sich unter anderem in der Höhe des Ambosses unterscheiden. Ebenfalls kann die Länge der abstehenden Teile der Kontakte von Produkt zu Produkt unterschiedlich sein. Je nachdem welches Presswerkzeug und welcher Kontakt zur Anwendung kommen, ist es notwendig, dass bei einem Produktwechsel die Bearbeitungsstationen in ihrer Höhe mittels eine Höhenverstellung 8' neu eingestellt werden, um den lichten Korridor sicherzustellen. Beim Einrichten des Produkts wird der Stößel 7` so eingestellt, dass er den Greifer bzw. das Halteelement, der bzw. das das Kabelende hält, kontaktiert, sobald der Stempel den gewünschten Abstand zum Kabelende erreicht. Da dies von Hand für jedes Produkt neu erfolgt, ist diese Einstellung eine bekannte Fehlerquelle.

Zu Beginn des Pressprozesses befindet sich das Kabelende bzw. die Kabelspitze zwischen dem Stempel und den abstehenden Teilen des Kontakts. Nun fährt die Presse 5` den Stempel und den Stößel in negativer Z-Richtung (d.h. in der Höhenrichtung nach unten) auf das Kabelende bzw. die Kabelspitze zu. Die Flanken des Stempels schließen dabei das Kabelende bzw. die Kabelspitze ein. Sobald der eingestellte Abstand zwischen Stempel und Kabelende erreicht wird, bewegt die Presse 5` den Stempel und über den Stößel 7` den Greifer bzw. das Halteelement mit dem Kabelende in negative Z-Richtung auf den Amboss und den Kontakt zu. Im weiteren Verlauf kommt das Kabelende in der Senke des Kontaktteils zu liegen, während dem die abstehenden Teile des Kontakts durch den Stempel verformt werden. Da der Stößel 7` nur für einen relativen Abstand zwischen dem Stempel und das Kabelende eingestellt werden kann, befindet sich das Kabel unterhalb der Position des Kontakts, wenn der Stempel seine Endposition erreicht. Das Kabel wird dabei überdrückt respektive verbogen. Bei Kabeln, insbesondere bei Kabeln mit kleinerem Querschnitt, besteht bei diesem Überdrücken die Gefahr, dass das Kabelende aus der Verbindung gezogen wird. Nach Abschluss des Pressens wird das Presswerkzeug geöffnet und das Kabelende zurückgeschwenkt. Nachdem die gewünschte Länge des Kabels geliefert wurde, trennen die Messer im Messerblock 4` das Kabel. Das hintere Ende des abgetrennten Kabels wird ebenfalls wie oben beschrieben bearbeitet, wobei eine zweite Schwenkarmeinrichtung bzw. Kabelendehaltevorrichtung und eine zweite Presse auf der gegenüberliegenden Seite des Messerblocks 4` vorhanden sind. Somit muss der Amboss jeweils auf die Höhenposition angepasst werden, in der sich das Kabelende bzw. die Kabelspitze befindet. Zudem müssen im Stand der Technik die Werkzeuge jeweils auf eine derartige Höhe eingestellt werden, dass ein lichter Korridor auf gleicher Höhe beim Drehen des Greifers bzw. des Kabelhalteelements entsteht.

Es kann unter anderem ein Bedarf an einer Kabelendehaltevorrichtung zum Halten eines Kabelendes bzw. an einem Verfahren zum Positionieren eines Kabelendes eines Kabels, welche bzw. durch welches das Kabelende bzw. die Kabelspitze technisch einfach in unterschiedlichen Höhen positioniert werden kann.

Einem solchen Bedarf kann durch eine Kabelendehaltevorrichtung gemäß dem unabhängigen Anspruch 1 bzw. durch eine Kabelkonfektioniermaschine zum Konfektionieren eines Kabels gemäß dem Anspruch 6 bzw. durch ein Verfahren zum Positionieren eines Kabelendes eines Kabels gemäß dem unabhängigen Anspruch 7 entsprochen werden. Vorteilhafte Ausführungsformen sind in den abhängigen Ansprüchen definiert.

Gemäß einem ersten Aspekt der Erfindung wird eine Kabelendehaltevorrichtung zum Halten eines Kabelendes eines Kabels, insbesondere für einen Crimp-Prozess, vorgeschlagen, wobei die Kabelendehaltevorrichtung folgendes umfasst: ein Kabelhalteelement zum Halten des Kabelendes, und eine Höhenpositionsveränderungsvorrichtung mit zwei Hebelelementen zum Verändern der Höhenposition des Kabelhalteelements entkoppelt von einer Bewegung eines Stempels bei dem Crimp-Prozess, wobei die Hebelelemente entlang einer Längsrichtung der Hebelelemente zueinander parallel verlaufend angeordnet sind, wobei die Hebelelemente in der Höhe und in einer Breitenrichtung, die senkrecht auf der Höhe und senkrecht auf der Längsrichtung steht, zueinander versetzt angeordnet sind, und wobei die Hebelelemente jeweils um eine entlang der Breitenrichtung verlaufende erste Drehachse drehbar gelagert sind, wobei die beiden ersten Drehachsen parallel zueinander verlaufen.

Ein Vorteil hiervon ist, dass das Kabelhalteelement üblicherweise technisch einfach in unterschiedlichen Höhenposition gehalten bzw. positioniert werden kann. Somit kann die Höhenposition des Kabelhalteelements und folglich des Kabelendes im Allgemeinen technisch einfach an das jeweilige Instrument angepasst werden. Eine Höhenveränderung der Werkzeuge ist folglich in der Regel nicht notwendig. Dies senkt typischerweise die Zeit für die Einrichtarbeiten erheblich. Darüber hinaus wird das Kabelhalteelement und folglich das Kabelende im Allgemeinen fest und sicher an der jeweiligen Höhenposition gehalten. Durch die Hebelelemente, die versetzt zueinander und parallel zueinander verlaufen, kann die Höhenposition des Kabelhalteelements bzw. des Kabelendes in der Regel technisch besonders einfach geändert werden und die geänderte Höhenposition besonders sicher und starr beibehalten werden. Bei einer Presse als Werkzeug kann typischerweise insbesondere auf einen Stößel bzw. eine feste Verbindung zwischen Presse und Kabelendehaltevorrichtung verzichtet werden. Zudem kann im Allgemeinen ein Überdrücken des Kabelendes beim Pressen sicher verhindert werden.

Gemäß einem zweiten Aspekt der Erfindung wird ein Verfahren zum Positionieren eines Kabelendes eines Kabels mittels einer Kabelendehaltevorrichtung, insbesondere für einen Crimp-Prozess, vorgeschlagen, wobei die Kabelendehaltevorrichtung eine Höhenpositionsveränderungsvorrichtung zum Verändern der Höhenposition eines Kabelhalteelements aufweist, wobei die Höhenpositionsveränderungsvorrichtung zwei entlang ihrer Längsrichtung zueinander parallel verlaufende Hebelelemente aufweist, und wobei die Hebelelemente jeweils um eine entlang einer Breitenrichtung verlaufende erste Drehachse drehbar gelagert sind, wobei die Breitenrichtung senkrecht auf der Höhe und senkrecht auf der Längsrichtung steht, wobei das Verfahren folgende Schritte umfasst: - Halten des Kabelendes mit dem Kabelhalteelement; und - Verändern der Höhenposition des Kabelendes, indem die Hebelelemente jeweils um ihre erste Drehachse gedreht werden.

Vorteilhaft hieran ist, dass das Kabelende typischerweise technisch einfach in unterschiedlichen Höhenposition gehalten bzw. positioniert werden kann. Die Höhenposition des Kabelendes bzw. der Kabelspitze kann somit in der Regel technisch einfach an das jeweilige Instrument bzw. Werkzeug angepasst werden. Eine Höhenveränderung der Werkzeuge ist folglich im Allgemeinen nicht notwendig. Dies senkt typischerweise die Zeit für die Bearbeitung des Kabelendes bzw. der Kabelspitze erheblich. Darüber hinaus wird das Kabelende im Allgemeinen fest und sicher an der jeweiligen Höhenposition gehalten. Durch die Hebelelemente, die versetzt zueinander und parallel zueinander verlaufen, kann die Höhenposition des Kabelendes im Allgemeinen technisch besonders einfach geändert werden und die geänderte Höhenposition besonders sicher und starr beibehalten werden. Durch dieses Verfahren kann bei einer Presse als Werkzeug typischerweise insbesondere auf einen Stößel bzw. eine feste Verbindung zwischen Presse und Kabelendehaltevorrichtung verzichtet werden. Zudem kann bei diesem Verfahren in der Regel ein Überdrücken des Kabelendes beim Pressen sicher verhindert werden.

Die beiden ersten Drehachsen der Hebelelemente verlaufen in der Höhe und in der Längsrichtung versetzt zueinander.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß einer Ausführungsform der Kabelendehaltevorrichtung umfasst die Kabelendehaltevorrichtung ferner eine Längspositionsveränderungsvorrichtung zum Verändern der Position des Kabelhalteelements entlang der Längsrichtung. Hierdurch kann im Allgemeinen die Höhenposition des Kabelhalteelements eingestellt bzw. verändert werden, ohne dass sich die Position des Kabelhalteelements in Längsrichtung verändert. Dies bedeutet, dass das Kabelhalteelement bzw. das von dem Kabelhalteelement gehaltene Kabelende in negativer Z-Richtung, d.h. in vertikaler Richtung nach unten, bewegt werden kann, ohne dass im Allgemeinen gleichzeitig eine Bewegung des Kabelhalteelements in einer Längsrichtung, die senkrecht zur Z-Richtung verläuft, stattfindet. Somit kann das Kabelende bzw. die Kabelspitze typischerweise noch genauer positioniert werden. Darüber hinaus kann in der Regel sichergestellt werden, dass sich bei einer Presse als Werkzeug das Kabelende relativ zu dem Stempel nicht in Längsrichtung bewegt, während das Kabelende nach unten bewegt wird.

Gemäß einer Ausführungsform der Kabelendehaltevorrichtung umfasst die Kabelendehaltevorrichtung ferner eine Drehvorrichtung zum Drehen des Kabelhalteelements und der Hebelelemente um eine entlang der Höhe verlaufende Rotationsachse. Hierdurch können verschiedenen Bearbeitungsstationen bzw. Werkzeuge, an denen das Kabel bzw. das Kabelende bearbeitet wird, typischerweise technisch einfach und schnell angefahren werden. Insbesondere können in der Regel auch Bearbeitungsstationen bzw. Werkzeuge angefahren, bei denen sich das Kabelende in unterschiedlichen Höhenpositionen befinden muss. Auch sind typischerweise ein Absenken und/oder ein Erhöhen der Position des Kabelendes bzw. der Kabelspitze entlang der Höhenrichtung während der Drehbewegung möglich, um Hindernissen bzw. Teilen von Bearbeitungsstationen beim Drehen auszuweichen. Somit muss in der Regel kein lichter Korridor auf gleicher Höhe beim Drehen des Greifers bzw. des Kabelhalteelements eingerichtet werden. Es kann eine Art Berg- und Talfahrt des Kabelhalteelements während der Drehung durchgeführt werden, um Kollisionen des Kabelhalteelements mit Teilen von Werkzeugen zu vermeiden.

Gemäß einer Ausführungsform der Kabelendehaltevorrichtung weist die Höhenpositionsveränderungsvorrichtung eine Kurvenscheibe, insbesondere eine arithmetische Spirale, und/oder einen Exzenter zum Verändern der Höhenposition des Kabelhalteelements auf. Hierdurch kann in der Regel technisch besonders einfach die Höhenposition des Halteelements geändert werden. Darüber hinaus weist die Höhenpositionsveränderungsvorrichtung typischerweise einen besonders geringen Verschleiß auf. Zudem kann die Höhenposition des Halteelements im Allgemeinen besonders genau eingestellt werden.

Gemäß einer Ausführungsform der Kabelendehaltevorrichtung weist das Kabelhalteelement eine Höhenpositionseinstellvorrichtung zum Verändern der Höhenposition des Kabelendes auf. Ein Vorteil hiervon ist, dass, während die Hebelelemente horizontal ausgerichtet sind bzw. bleiben, die Höhenposition des Kabelendes dennoch veränderbar ist. Auf diese Weise können Kräfte, die horizontal wirken, z.B. beim Abisolieren des Kabelendes, typischerweise besonders gut von den Hebelelementen aufgenommen werden, da diese trotz unterschiedlicher Höhenpositionen des Kabelendes stets horizontal ausgerichtet werden können.

Gemäß einer Ausführungsform des Verfahrens wird eine Änderung der Position des Kabelendes in Längsrichtung aufgrund einer Änderung der Höhenposition des Kabelendes durch eine Längspositionsveränderungsvorrichtung derart kompensiert, dass sich die Position des Kabelendes in Längsrichtung im Wesentlichen nicht verändert. Durch dieses Verfahren kann die Höhenposition des Kabelendes eingestellt bzw. verändert werden, ohne dass sich im Allgemeinen die Position des Kabelendes in Längsrichtung verändert. Dies bedeutet, dass das Kabelende bzw. die Kabelspitze in negativer Z-Richtung, d.h. in vertikaler Richtung nach unten, bewegt werden kann, ohne dass gleichzeitig eine Bewegung des Kabelendes in einer Längsrichtung, die senkrecht zur Z-Richtung verläuft, stattfindet. Somit kann das Kabelende bzw. die Kabelspitze typischerweise noch genauer positioniert werden. Darüber hinaus kann im Allgemeinen sichergestellt werden, dass sich bei einer Presse als Werkzeug das Kabelende relativ zu dem Stempel nicht in Längsrichtung bewegt, während das Kabelende nach unten bewegt wird.

Gemäß einer Ausführungsform des Verfahrens wird ein Abstand des Kabelendes zu einem Kontaktelement, das auf einem Amboss einer Presse angeordnet ist, mittels der Höhenpositionsveränderungsvorrichtung für einen vorgegebenen Zeitraum synchron mit einem Abstand eines Stempels der Presse zu dem Kontaktelement verringert. Hierdurch wird das Kabelende typischerweise technisch einfach zusammen bzw. zeitgleich mit dem Stempel auf ein Kontaktelement zu bewegt.

Gemäß einer Ausführungsform des Verfahrens wird vor dem Auftreffen des Kabelendes auf dem Kontaktelement die Bewegungsgeschwindigkeit des Kabelendes relativ zu dem Kontaktelement verringert, so dass das Kabelende mit einer verringerten Geschwindigkeit das Kontaktelement kontaktiert. Durch das Abbremsen des Kabelendes vor dem Erreichen bzw. Berühren des Kontaktelements wird typischerweise verhindert, dass große Kräfte entlang der Bewegungsrichtung des Kabelendes, d.h. in Z-Richtung, beim Auftreffen des Kabelendes auf das Kontaktelement auftreten. Hierdurch wird im Allgemeinen ein unbeabsichtigtes Verbiegen bzw. Überdrücken des Kabelendes bzw. des Kabels sicher verhindert.

Gemäß einer Ausführungsform des Verfahrens umfasst das Verfahren ferner folgende Schritte: Drehen des Kabelendes um eine entlang der Höhe verlaufende Rotationsachse derart, dass das Kabelende zu einer Trennvorrichtung zeigt; Festhalten eines zu entfernenden Teils des Kabelendes, insbesondere einer Isolation des Kabelendes, mittels der Trennvorrichtung; und Wegbewegen des Kabelendes entlang der Längsrichtung, so dass der zu entfernende Teil von der Trennvorrichtung festgehalten wird und von dem Kabelende getrennt wird. Hierdurch wird typischerweise technisch besonders einfach ein Teil des Kabelendes bzw. des Kabels absioliert.

Gemäß einer Ausführungsform des Verfahrens umfasst das Verfahren ferner folgenden Schritt: Verändern der Höhenposition des Kabelendes mittels einer Höhenpositionseinstellvorrichtung des Kabelhalteelements. Ein Vorteil dieses Verfahrens ist, dass, während die Hebelelemente horizontal ausgerichtet sind bzw. bleiben, die Höhenposition des Kabelendes dennoch verändert wird. Auf diese Weise können Kräfte, die horizontal wirken, z.B. beim Abisolieren des Kabelendes, typischerweise besonders gut von den Hebelelementen aufgenommen werden, da diese trotz unterschiedlicher Höhenpositionen des Kabelendes stets horizontal ausgerichtet werden können.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine perspektivische Ansicht einer Ausführungsform der erfindungsgemäßen Kabelendehaltevorrichtung;
- Fig. 2 zeigt: eine Seitenansicht der Kabelendehaltevorrichtung aus Fig. 1;
- Fig. 3 zeigt: eine Aufsicht auf die Kabelendehaltevorrichtung aus Fig. 1 bzw. Fig. 2;
- Fig. 4a-4d zeigen: Detailansichten eines Kabelendes während des Vorgangs des Verbindens mit dem Kontaktelement;
- Fig. 5 zeigt: eine Aufsicht auf einen Teil der Kabelendehaltevorrichtung aus den Fig. 1-3;
- Fig. 6 zeigt: eine Schnittansicht des Teils der Kabelendehaltevorrichtung aus Fig. 5 entlang der Linie VI-VI;
- Fig. 7a zeigt: eine Schnittansicht des Teils der Kabelendehaltevorrichtung aus Fig. 5 entlang der Linie VIIa-VIIa;
- Fig. 7b zeigt: eine Schnittansicht des Teils der Kabelendehaltevorrichtung aus Fig. 5 entlang der Linie VIIa-VIIa, wobei die Hebelelemente im Wesentlichen horizontal ausgerichtet sind;
- Fig. 8 zeigt: eine schematische Ansicht der Veränderung der Höhenposition in zwei unterschiedlichen Ausrichtungen der Hebelelemente; und
- Fig. 9 zeigt: eine perspektivische Detailansicht einer arithmetischen Spirale der Kabelendehaltevorrichtung aus den Fig. 1-3.

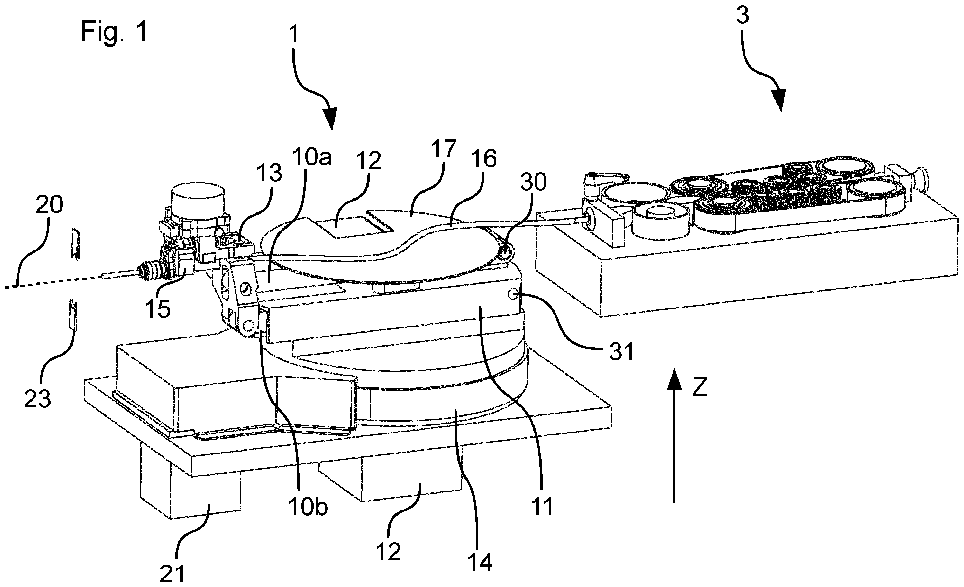

Die Figuren sind lediglich schematisch und nicht maßstabsgetreu. Gleiche Bezugszeichen bezeichnen in den verschiedenen Figuren gleiche oder gleichwirkende Merkmale
Fig. 1 zeigt eine perspektivische Ansicht einer Ausführungsform der erfindungsgemäßen Kabelendehaltevorrichtung 1.

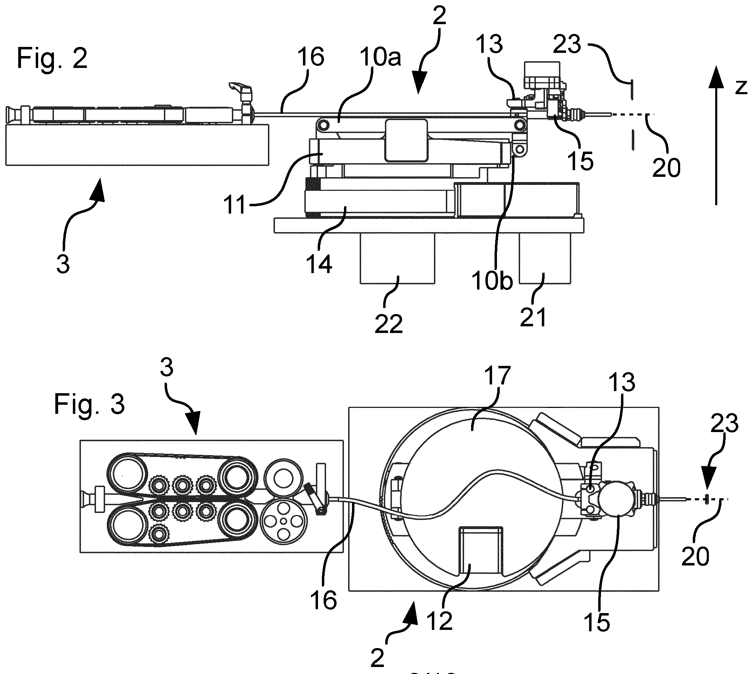

Fig. 2 zeigt eine Seitenansicht der Kabelendehaltevorrichtung 1 aus Fig. 1.
Fig. 3 zeigt eine Aufsicht auf die Kabelendehaltevorrichtung 1 aus Fig. 1 bzw. Fig. 2.

Die Kabelendehaltevorrichtung 1 weist einen Schwenkarm 2 und ein Kabelhalteelement 15 zum Halten eines Kabelendes 25 bzw. einer Kabelspitze eines Kabels. Der Schwenkarm 2 kann das Kabelhalteelement 15 um eine vertikale Achse drehen und in einer Längsrichtung (die in Fig. 2 von links nach rechts verläuft) und in einer Höhenrichtung (die in Fig. 2 von unten nach oben verläuft) verändern.

Das Kabelhalteelement 15 hält das Kabelende 25 bzw. die Kabelspitze, d.h. das Ende eines Kabels. Die äußerste Spitze bzw. das äußerste Endes des Kabels steht aus dem Kabelhalteelement 15 auf einer dem Schwenkarm 2 abgewandten Seite des Kabelhalteelements 15 hervor.

Das Kabelende 25 bzw. die Kabelspitze ist normalerweise nicht das äußerste Ende des Kabels. Das Kabelende 25 bzw. die Kabelspitze ist ein Teil des Kabels, der sich nahe dem äußersten Ende des Kabels befindet. Das äußerste Ende des Kabels kann beispielsweise ca. 0,5 cm bis ca. 5 cm, insbesondere ca. 1 cm bis ca. 3 cm, vorzugsweise ca. 1 cm bis ca. 2 cm, von dem Teil des Kabels beabstandet sein, der von dem Kabelhalteelement 15 ergriffen bzw. behalten bzw. teilweise oder vollständig umschlossen wird.

Die Kabelendehaltevorrichtung 1 umfasst zudem eine Höhenpositionsveränderungsvorrichtung zum Verändern der Höhenposition des Kabelhalteelements 15 und somit zum Verändern der Höhenposition des von dem Kabelhalteelement 15 gehaltenen Kabelendes 25. Eine Verringerung der Höhenposition des Kabelhalteelements 15 bedeutet, dass das Kabelhalteelement 15 näher an den Erdboden herangefahren wird bzw. abgesenkt wird. Eine Erhöhung der Höhenposition des Kabelhalteelements 15 bedeutet, dass das Kabelhalteelement 15 vom Erdboden weiter entfernt wird (in positive Z-Richtung bewegt wird).

Das Kabel wird von einer Kabelzuführung 3 der Kabelendehaltevorrichtung 1 zugeführt. Das Kabel ist zumindest teilweise in einem Führungsschlauch 16 angeordnet. Das Kabelende ist typischerweise nicht in dem Führungsschlauch 16 angeordnet. Der Führungsschlauch 16 liegt auf einem plattenförmigen Teller bzw. Platte 17 der Kabelendehaltevorrichtung 1 teilweise auf bzw. wird von dem Teller auf dem oberen Hebelelement 10a gestützt. Auf dem Teller bzw. der Platte 17 verläuft der Führungsschlauch 16 üblicherweise nicht geradlinig.

Auf der der Kabelzuführung 3 abgewandten Seite der Kabelendehaltevorrichtung 1 ist das Kabelhalteelement 15 angeordnet. Das Kabelhalteelement 15 ist am Schwenkarm 2 montiert. Das Kabelhalteelement 15 umfasst einen Greifer, der das Kabelende 25 bzw. das Kabel greift und hält. Das Kabelhalteelement 15 ist an den Hebelelementen 10a, 10b des Schwenkarms 2 befestigt.

Der Greifer bzw. das Kabelhalteelement 15 ist um eine horizontal verlaufende Achse drehbar gelagert, so dass das Kabelende 25 stets horizontal verläuft. Der Teller bzw. die Platte 17 sitzt auf einem der Hebelelemente 10a, 10b und ändert seine Winkelposition zum Kabelhalteelement 15 konstruktionsbedingt, wenn die Höhenposition des Kabelhalteelements 15 geändert wird.

Links in Fig. 1 ist ein Messer 23 bzw. ein Doppelmesser zum Abisolieren des Kabelendes 25 und/oder zum Schneiden des Kabels gezeigt. Die Hebelelemente 10a, 10b werden derart ausgerichtet, dass sie horizontal verlaufen. Mittels der

Höheneinstellungsvorrichtung werden die Hebelelemente 10a, 10b und folglich das Kabelhalteelement 15 auf die gewünschte bzw. benötigt Höhe eingestellt. Das Kabelende 25 bzw. die Kabelspitze wird mittig zwischen die zwei Elemente des Messers 23 geführt.

Daraufhin wird das Messer 23 so weit geschlossen, dass die Isolierung des Messers 23 durchschnitten wird, jedoch nicht der metallische Kern/Leiter des Kabels selbst. Anschließend wird das Kabelende 25 wieder von dem Messer 23 bzw. den Messern in Längsrichtung wegbewegt, so dass die Isolierung bei dem Messer 23 verleibt und sich vom restlichen Kabel bzw. von dem Kabelende 25 löst.

Die Kabelendehaltevorrichtung 1 umfasst zwei Hebelelemente 10a, 10b, auch Parallelogrammhebelelemente genannt. Die zwei Hebelelemente 10a, 10b sind jeweils um eine horizontal verlaufende erste Drehachse 30, 31 drehbar gelagert. Die beiden ersten Drehachsen 30, 31 befinden sich in Fig. 1 auf der rechten Seite. Die zwei ersten Drehachsen 30, 31 verlaufen parallel zueinander und in der Höhe versetzt zueinander. Zudem sind die zwei Hebelelemente 10a, 10b jeweils um eine horizontal verlaufende zweite Drehachse 40, 41 drehbar gelagert. Die beiden zweiten Drehachsen 40, 41 befinden sich in Fig. 1 auf der linken Seite.

Die zwei Hebelelemente 10a, 10b verlaufen parallel zueinander. Die Hebelelemente 10a, 10b sind in der Höhe (Z-Richtung) und in einer Richtung, die senkrecht zur Höhenrichtung und senkrecht zur Längsrichtung der beiden Hebelelemente 10a, 10b (wobei die Längsrichtung in Fig. 2 und in Fig. 3 von links nach rechts verläuft) zueinander versetzt angeordnet. Diese Richtung verläuft senkrecht zur Zeichenebene der Fig. 2. Das eine Hebelelement 10a ist in Fig. 1 weiter vorne angeordnet als das andere Hebelelement 10b.

Das eine Hebelelement 10b (in Fig. 1 das vordere Hebelelement) ist in einer Höheposition angeordnet, die eine geringere Höhe aufweist als die Höhenposition des anderen Hebelelements 10a (in Fig. 1 das hintere Hebelelement). Die beiden Hebelelemente 10a, 10b bilden Teile bzw. die Längsseiten eines Parallelogramms.

Der in Fig. 1 obere Teil der Kabelendehaltevorrichtung 1 umfassend die Hebelelemente 10a, 10b und das Kabelhalteelement 15 ist um eine vertikal verlaufende Achse drehbar. Hierzu weist die Kabelendehaltevorrichtung 1 eine Drehvorrichtung 14 zum Drehen der Hebelelemente 10a, 10b bzw. des Kabelhalteelements 15 auf. Hierdurch können verschiedene Bearbeitungsstationen bzw. Werkzeuge zur Bearbeitung des Kabelendes 25 bzw. der Kabelspitze angefahren werden. Die Drehvorrichtung 14 weist einen Motor 21 zum Durchführen der Drehbewegung auf. Die Drehvorrichtung 14 kann die Hebelelemente 10a, 10b um eine Rotationsachse drehen, die vertikal verläuft. Die Rotationsachse kann insbesondere durch die Mittel des Tellers bzw. der Platte 17 verlaufen.

Die Kabelachse 20 verläuft entlang der Haupterstreckungsrichtung des Kabelendes 25 und in Fig. 1 parallel zu der Längsrichtung der Hebelelemente 10a, 10b bzw. Hebel.

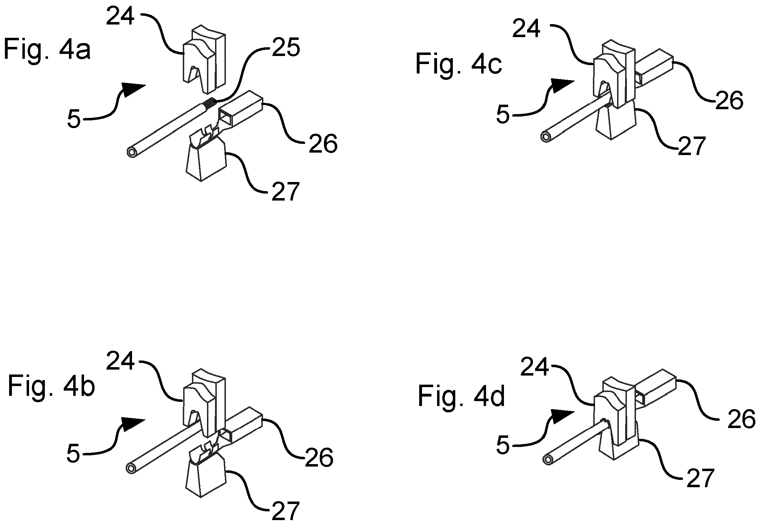

Fig. 4a-4d zeigen Detailansichten eines Kabelendes 25 während des Vorgangs des Verbindens des Kabelendes 25 mit einem Kontaktelement 26 mittels einer Presse 5. Das Kontaktelement 26 kann z.B. ein Crimpelement sein. Zunächst befindet sich das Kabelende 25 näher an dem Kontaktelement 26 als an dem Stempel 24, um eine unnötige Bewegung des Kabelendes 25 zu vermeiden (siehe Fig. 4a). Daraufhin wird der Stempel 24 auf den Amboss 27 bzw. das Kabelende 25 zu bewegt, z.B. bis der Stempel 24 einen vorgegebenen Abstand zwischen Stempel 24 und Kabelende 25 entlang der Höhenrichtung (Z-Richtung) aufweist.

Nun werden der Stempel 24 und das Kabelende 25 synchron, d.h. mit der gleichen Geschwindigkeit, auf den Amboss 27 gemeinsam zu bewegt (siehe Fig. 4b). Hierbei wird die Höhenposition (Position entlang der Z-Richtung) des Kabelendes 25 durch Veränderung des Winkels der Hebelelemente 10a, 10b zur Horizontalen verändert, indem die Hebelelemente 10a, 10b um ihre ersten Drehachsen 30, 31 gedreht werden.

Zwischen Fig. 4b und Fig. 4c wird das Kabelende 25 synchron mit dem Stempel 24 in Richtung des Ambosses 27 bewegt. Bei Fig. 4b wird das Kabelende 25 auf die Geschwindigkeit des Stempels 24 beschleunigt. Kurz vor der in Fig. 4c dargestellten Situation wird das Kabelende 25 abgebremst, damit das Kabelende 25 nicht auf dem Kontaktelement 26 aufprallt. Die Bewegung des Kabelendes 25 wird nach einem vorgegebenen Zeitraum, in dem sich das Kabelende 25 synchron mit dem Stempel 24 bewegt, von der Bewegung des Stempels 24 entkoppelt, indem die Bewegung des Kabelendes 25 nach dem vorgegebenen Zeitraums verringert wird.

Die Veränderung der Position des Kabelendes 25 entlang der Längsrichtung der Hebelelemente 10a, 10b bzw. parallel zur Horizontalen aufgrund der Drehung der Hebelelemente 10a, 10b um die ersten Drehachsen 30, 31 wird durch die Längspositionsveränderungsvorrichtung 11 kompensiert. Somit werden die Hebelelemente 10a, 10b entlang der Längsrichtung bewegt, während sich die Hebelelemente 10a, 10b um ihre ersten Drehachsen 30, 31 drehen.

Wenn die Hebelelemente 10a, 10b hierbei ihre horizontale Position durchfahren, findet eine Vorwärtsbewegung und anschließend eine Rückwärtsbewegung bzw. umgekehrt in Längsrichtung statt, so dass sich das Kabelende 25 nur entlang der Höhenrichtung (Z-Richtung) bewegt.

Schließlich berührt das Kabelende 25 bzw. die Kabelspitze das Kontaktelement 26 (siehe Fig. 4c). Kurz zuvor, d.h. bevor das Kabelende 25 in eine Senke des Kontaktelements 26 gelangt, wird die Geschwindigkeit der Bewegung des Kabelendes 25 auf das Kontaktelement 26 zu verringern, d.h. das Kabelende 25 wird abgebremst. Hierdurch werden die auftretenden Kräfte beim Auftreffen des Kabelendes 25 auf das Kontaktelement 26 verringert. Das Kabelende 25 wird zusammen mit einem Teil des Kabels bewegt, um ein Knicken bzw. Verbiegen des Kabels zu verhindern.

Der Stempel 24 drückt das Kabelende 25 bzw. die Kabelspitze und das Kontaktelement 26 gegen den Amboss 27 und drückt somit das Kabelende 25 gegen das Kontaktelement 26 (siehe Fig. 4d). Die abstehenden Teile des Kontaktelements 26 werden durch den Stempel 24 verformt und somit wird eine Verbindung zwischen Kabelende 25 bzw. Kabel und Kontaktelement 26 gebildet. Anschließend entfernt sich der Stempel 24 wieder vom Amboss 27 und gibt das Kabelende 25 mit dem mit dem Kabelende 25 verbundenen Kontaktelement 26 frei.

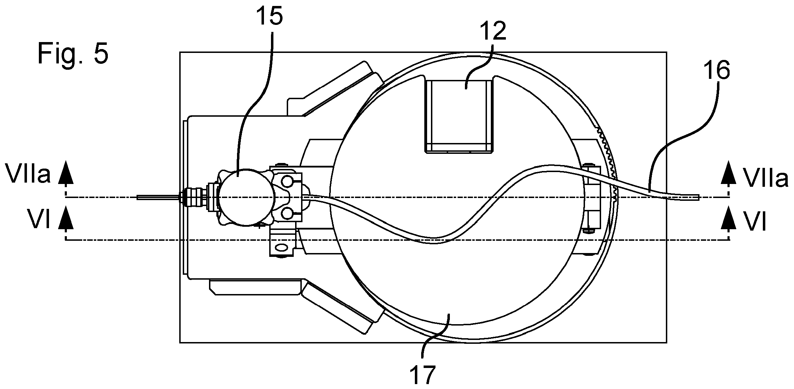

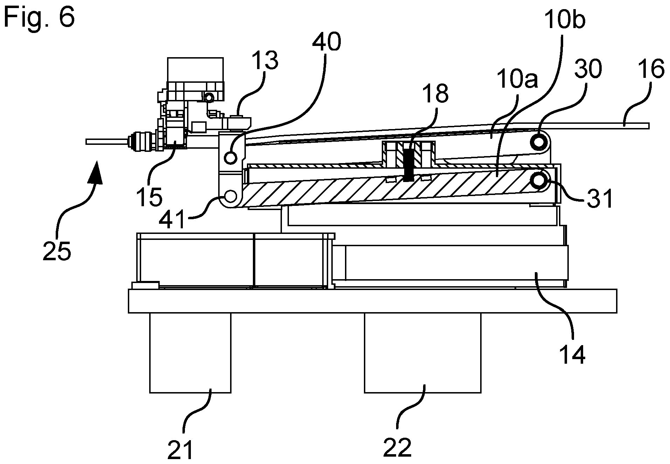

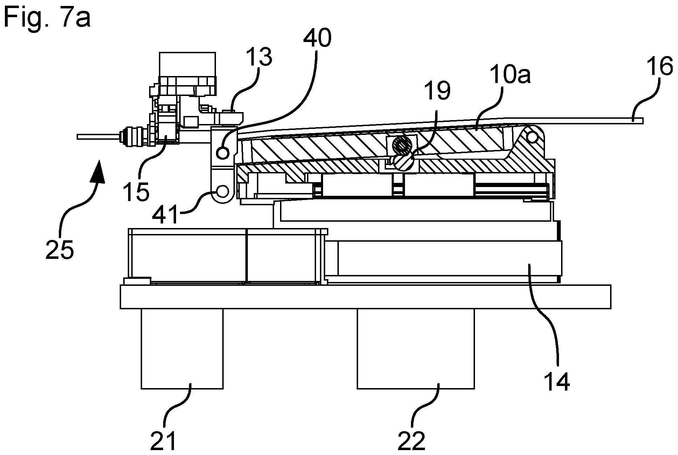

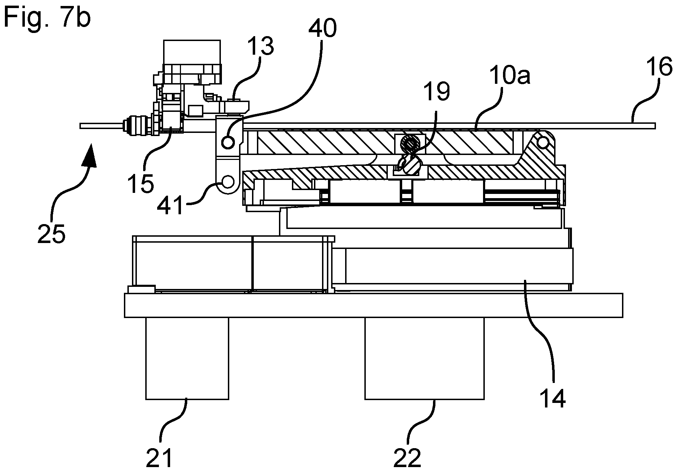

Fig. 5 zeigt eine Aufsicht auf einen Teil der Kabelendehaltevorrichtung 1 aus den Fig. 1-3. Fig. 6 zeigt eine Schnittansicht des Teils der Kabelendehaltevorrichtung 1 aus Fig. 5 entlang der Linie VI-VI. Fig. 7a zeigt eine Schnittansicht des Teils der Kabelendehaltevorrichtung 1 aus Fig. 5 entlang der Linie VIIa-VIIa. Fig. 7b zeigt eine Schnittansicht des Teils der Kabelendehaltevorrichtung 1 aus Fig. 5 entlang der Linie VIIa-VIIa, wobei die Hebelelemente 10a, 10b im Wesentlichen horizontal ausgerichtet sind.

Die Kabelendehaltevorrichtung 1 umfasst eine Längspositionsveränderungsvorrichtung 11. Die Längspositionsveränderungsvorrichtung 11 bewegt den in Fig. 7b oberen Teil der Kabelendehaltevorrichtung 1 umfassend die Hebelelemente 10a, 10b und das Kabelhalteelement 15 bzw. den Schwenkarm 2 nach rechts und links, d.h. entlang der Längsrichtung der Hebelelemente 10a, 10b, sofern diese horizontal ausgerichtet sind (wobei dies nicht bedeutet, dass eine solche Bewegung nur möglich ist, wenn die Hebelelemente 10a, 10b horizontal ausgerichtet sind).

Da bei einer Veränderung der Höhenposition des Greifers bzw. des Kabelhalteelements 15 sich (ohne entsprechende Kompensation) die Längsposition des Greifers bzw. des Kabelhalteelements 15 und somit des Kabelendes 25 ändert, wird der obere Teil der Kabelendehaltevorrichtung 1 entsprechend entlang der Längsrichtung (in Fig. 7b nach links bzw. nach rechts) bewegt, um diese Änderung der Längsposition auszugleichen. Hierdurch kann das Kabelende 25 derart bewegt werden, dass sich die Längsposition des Kabelendes 25 im Wesentlichen nicht verändert, sondern nur die Höhenposition des Kabelendes 25. Dies bedeutet, dass die Bewegung des Kabelendes 25, die durch Drehung der Hebelelemente 10a, 10b um ihre ersten Drehachsen 30, 31 einen Bogen beschreibt, durch die Längspositionsveränderungsvorrichtung 11 kompensiert wird, so dass eine reine Bewegung nach oben bzw. unten (Z-Richtung) erreicht wird. Die Längsposition des Kabelendes 25 bzw. der Kabelspitze kann auf wenige Hundertstel Millimeter, wie dies z.B. bei der Verarbeitung von Aluminiumkabeln notwendig ist, eingestellt werden.

Das Kabelhalteelement 15 umfasst eine Höhenpositionseinstellvorrichtung 13. Die Höhenpositionseinstellvorrichtung 13 erlaubt eine Feinjustierung der Höhenposition des Kabelendes 25 in Z-Richtung. Hierdurch können die Hebelelemente 10a, 10b, d.h. die Längsseiten des Parallelogramms, für das Abisolieren stets waagrecht ausgerichtet werden, so dass die auftretenden Kräfte beim Abisolieren besonders gut von dem Parallelogramm bzw. den Hebelelementen 10a, 10b aufgenommen werden können, weil die auftretenden Kräfte entlang der Hebelelemente 10a, 10b wirken.

Mittels der Höhenpositionseinstellvorrichtung 13, die als Feinjustierungsvorrichtung dient, kann die Höhe des Kabelendes 25 besonders fein eingestellt bzw. verändert werden.

Einzelne Positionen, in denen das Kabelende 25 für verschiedene Bearbeitungsstationen bzw. Werkzeuge angeordnet sein muss, können gespeichert werden (z.B. in einem EEPROM, auf einer Festplatte und/oder in der Cloud) und wieder abgerufen werden. So kann der Benutzer bei einem Werkzeugwechsel die entsprechende Position (in Höhenrichtung und/oder in Längsrichtung und/oder in Breitenrichtung) und/oder der entsprechende Drehwinkel laden bzw. eingeben. Somit müssen die Bearbeitungsstationen bzw. Werkzeuge nicht in der Höhe eingestellt werden, da die Kabelendehaltevorrichtung 1 die Position des Kabelendes 25 entsprechend verändert bzw. anpasst werden.

Die Längspositionsveränderungsvorrichtung 11 weist einen Motor 22 zum Verändern der Längsposition des Kabelhalteelements 15 auf.

Fig. 7b zeigt eine Ansicht entlang der gleichen Schnittebene wie Fig. 7a. In Fig. 7a weisen die Hebelelemente 10a, 10b, genauer gesagt die Längsrichtung der Hebelelemente 10a, 10b, einen Winkel ungleich Null zur Horizontalen auf, wobei das linke Ende der Hebelelemente 10a, 10b in Fig. 7a tiefer liegt als das rechte Ende der Hebelelemente 10a, 10b. Anders ausgedrückt befinden sich die untere zweite Drehachse 41 tiefer als die untere erste Drehachse 31 und die obere zweite Drehachse 40 tiefer als die obere erste Drehachse 30. In Fig. 7b verlaufen die Längsrichtungen der Hebelelemente 10a, 10b horizontal. Die obere erste Drehachse 30 befindet sich in Fig. 7b auf der gleichen Höhe wie die obere zweite Drehachse 40 und die untere erste Drehachse 31 befindet sich in Fig. 7b auf der gleichen Höhe wie die untere zweite Drehachse 41. Sowohl in Fig. 7a als auch in Fig. 7b verläuft das Kabelende horizontal.

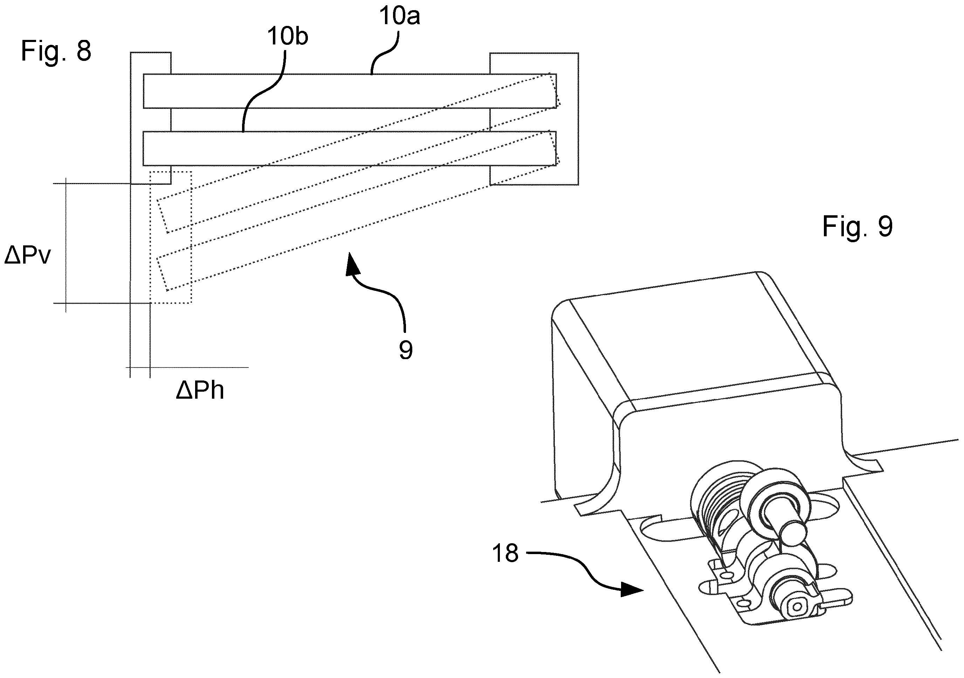

Fig. 8 zeigt eine schematische Ansicht der Veränderung der Höhenposition in zwei unterschiedlichen Ausrichtungen der Hebelelemente 10a, 10b. Fig. 9 zeigt eine perspektivische Detailansicht einer arithmetischen Spirale 19 der Kabelendehaltevorrichtung 1 aus den Fig. 1-3.

Fig. 8 zeigt die Parallelogrammführung 9. In Fig. 8 ist zu erkennen, dass eine Drehung der Hebelelemente 10a, 10b um ihre ersten Drehachsen 30, 31, die zu einer Höhenänderung des Kabelhalteelements 15 von ΔPv führt, zu einer Veränderung der Position des Kabelhalteelements 15 um eine Länge ΔPh führt. Diese Veränderung in der Längsposition des Kabelhalteelements 15 kann durch die Längspositionsveränderungsvorrichtung 11 ausgeglichen bzw. kompensiert werden, so dass nur eine Höhenänderung der Position des Kabelhalteelements 15 stattfindet.

Der Winkel der Hebelelemente 10a, 10b zur Horizontalen (die in Fig. 7a bzw. Fig. 7b von links nach rechts verläuft) kann mittels einer Kurvenscheibe, insbesondere einer arithmetischen bzw. archimedischen Spirale 19, verändert werden. Hierdurch können die Hebelelemente 10a, 10b technisch einfach um ihre ersten Drehachsen 30, 31 gedreht werden.

Die Kurvenscheibe kann mit einem Schrittmotor 12 angetrieben werden. Alternativ ist auch ein Exzenter vorstellbar. Ein Federelement 18 drückt eines der Hebelelemente 10a, 10b, nämlich das obere Hebelelemente 10a, gegen die Kurvenscheibe, so dass der Kontakt zwischen diesem Hebelelement 10a und der Kurvenscheibe stets gewahrt bleibt.

Alternativ oder zusätzlich ist eine Veränderung des Winkels der Hebelelemente 10a, 10b zur Horizontalen bzw. Drehung der Hebelelemente 10a, 10b um ihre ersten Drehachsen 30, 31 mittels einer motorisch angetriebenen Spindel, einem Linearmotor und/oder einem steuerbaren Druckluftzylinder vorstellbar.

So kann z.B. eine motorisch angetriebene Spindel eines der Hebelelemente 10a, 10b nach oben und unten drücken bzw. ziehen. Hierdurch drehen sich die Hebelelemente 10a, 10b um ihre jeweilige erste Drehachse 30, 31 und verändern ihren Winkel zur Horizontalen. Folglich ist die Höhenposition der zweiten Drehachsen 40, 41 durch die motorisch angetriebene Spindel veränderbar.

Ein Linearmotor kann derart angeordnet sein, dass er die Hebelelemente 10a, 10b nach oben bzw. unten drückt/zieht, so dass sich die Hebelelemente 10a, 10b um ihre jeweilige erste Drehachse 30, 31 drehen und ihren Winkel zur Horizontalen verändern.

Auch mittels eines steuerbaren Druckluftzylinders können die Hebelelemente 10a, 10b um ihre ersten Drehachsen 30, 31 gedreht werden und der Winkel der Hebelelemente 10a, 10b zur Horizontalen verändert werden.

Nach dem Verbinden des Kabelendes 25 mit dem Kontaktelement 26 wird die Länge des Kabels mittels des Messers 23 auf die gewünschte Länge gekürzt. Nachfolgend kann auf der anderen Seite des Messers 23 der Prozess bzw. Vorgang analog zu dem bisher beschriebenen Vorgang fortgesetzt werden. Dies bedeutet, dass das Kontaktelement 26 durch das Messer 23 bzw. die Öffnung des Messers 23 geführt wird, das Kabel auf der anderen Seite von einem weiteren Greifer bzw. Kabelhalteelement 15 ergriffen wird. Das Kabel wird nun durchtrennt. Anschließend kann das freie Kabelende des Kabels, dessen eines Kabelende 25 bereits mit einem Kontaktelement 26 verbunden ist, ebenfalls mit einem Kontaktelement 26 verbunden werden, insbesondere auf die oben beschriebene Art und Weise.

Die Hebelelemente 10a, 10b werden stets um den gleichen Winkel um ihre jeweilige erste Drehachse 30, 31 gedreht, so dass die Hebelelemente 10a, 10b stets parallel zueinander ausgerichtet sind. Hierdurch wird auch eine Kabelkonfektioniermaschine offenbart, die eine bzw. die beschriebene Kabelendehaltevorrichtung und ein bzw. das beschriebene Messer umfasst. Die Hebelelemente können die gleiche Länge aufweisen.

Die ersten Drehachsen der beiden Hebelelemente befinden sich in Längsrichtung, die in Fig. 8 von links nach rechts verläuft, an der gleichen Position. Es ist auch vorstellbar, dass die Kabelzuführung 3 auf dem Schwenkarm 2 montiert ist.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kabelendehaltevorrichtung (1) zum Halten eines Kabelendes (25) eines Kabels für einen Crimp-Prozess, wobei die Kabelendehaltevorrichtung (1) folgendes umfasst:
ein Kabelhalteelement (15) zum Halten des Kabelendes (25), und
eine Höhenpositionsveränderungsvorrichtung mit zwei Hebelelementen (10a, 10b) zum Verändern der Höhenposition des Kabelhalteelements (15),
wobei die Hebelelemente (10a, 10b) entlang einer Längsrichtung der Hebelelemente (10a, 10b) zueinander parallel verlaufend angeordnet sind,
wobei die Hebelelemente (10a, 10b) in der Höhe und in einer Breitenrichtung, die senkrecht auf der Höhe und senkrecht auf der Längsrichtung steht, zueinander versetzt angeordnet sind, und
wobei die Hebelelemente (10a, 10b) jeweils um eine entlang der Breitenrichtung verlaufende erste Drehachse (30, 31) drehbar gelagert sind, wobei die beiden ersten Drehachsen (30, 31) parallel zueinander verlaufen, **dadurch gekennzeichnet, dass** die Höhenpositionsveränderungsvorrichtung von einer Bewegung eines Stempels bei dem Crimp-Prozess entkoppelt ist.

2. Kabelendehaltevorrichtung (1) nach Anspruch 1, wobei die Kabelendehaltevorrichtung (1) ferner eine Längspositionsveränderungsvorrichtung (11) zum Verändern der Position des Kabelhalteelements (15) entlang der Längsrichtung umfasst.

3. Kabelendehaltevorrichtung (1) nach Anspruch 1 oder 2, ferner umfassend eine Drehvorrichtung (14) zum Drehen des Kabelhalteelements (15) und der Hebelelemente (10a, 10b) um eine entlang der Höhe verlaufende Rotationsachse.

4. Kabelendehaltevorrichtung (1) nach einem der vorhergehenden Ansprüche, wobei
die Höhenpositionsveränderungsvorrichtung eine Kurvenscheibe, insbesondere eine arithmetische Spirale (19), und/oder einen Exzenter zum Verändern der Höhenposition des Kabelhalteelements (15) aufweist.

5. Kabelendehaltevorrichtung (1) nach einem der vorhergehenden Ansprüche, wobei
das Kabelhalteelement (15) eine Höhenpositionseinstellvorrichtung (13) zum Verändern der Höhenposition des Kabelendes (25) aufweist.

6. Kabelkonfektioniermaschine zum Konfektionieren eines Kabels, wobei die Kabelkonfektioniermaschine
ein Messer zum Schneiden des Kabels und
eine Kabelendehaltevorrichtung zum Halten eines Kabelendes des Kabels nach einem der vorhergehenden Ansprüche umfasst.

7. Verfahren zum Positionieren eines Kabelendes (25) eines Kabels mittels einer Kabelendehaltevorrichtung (1) für einen Crimp-Prozess nach Anspruch 1,
wobei die Kabelendehaltevorrichtung (1) eine Höhenpositionsveränderungsvorrichtung zum Verändern der Höhenposition eines Kabelhalteelements (15) aufweist, wobei die Höhenpositionsveränderungsvorrichtung zwei entlang ihrer Längsrichtung zueinander parallel verlaufende Hebelelemente (10a, 10b) aufweist, und wobei die Hebelelemente (10a, 10b) jeweils um eine entlang einer Breitenrichtung verlaufende erste Drehachse (30, 31) drehbar gelagert sind, wobei die Breitenrichtung senkrecht auf der Höhe und senkrecht auf der Längsrichtung steht,
wobei das Verfahren folgende Schritte umfasst:
- Halten des Kabelendes (25) mit dem Kabelhalteelement (15); und
- Verändern der Höhenposition des Kabelendes (25) entkoppelt von einer Bewegung eines Stempels bei dem Crimp-Prozess, indem die Hebelelemente (10a, 10b) jeweils um ihre erste Drehachse (30, 31) gedreht werden.

8. Verfahren nach Anspruch 7, wobei
eine Änderung der Position des Kabelendes (25) in Längsrichtung aufgrund einer Änderung der Höhenposition des Kabelendes (25) durch eine Längspositionsveränderungsvorrichtung (11) derart kompensiert wird, dass sich die Position des Kabelendes (25) in Längsrichtung im Wesentlichen nicht verändert.

9. Verfahren nach 7 oder 8, wobei
ein Abstand des Kabelendes (25) zu einem Kontaktelement (26), das auf einem Amboss (27) einer Presse (5) angeordnet ist, mittels der Höhenpositionsveränderungsvorrichtung für einen vorgegebenen Zeitraum synchron mit einem Abstand eines Stempels (24) der Presse (5) zu dem Kontaktelement (26) verringert wird.

10. Verfahren nach 9, wobei
vor dem Auftreffen des Kabelendes (25) auf dem Kontaktelement (26) die Bewegungsgeschwindigkeit des Kabelendes (25) relativ zu dem Kontaktelement (26) verringert wird, so dass das Kabelende (25) mit einer verringerten Geschwindigkeit das Kontaktelement (26) kontaktiert.

11. Verfahren nach einem der Ansprüche 7-10, ferner die Schritte umfassend:
Drehen des Kabelendes (25) um eine entlang der Höhe verlaufende Rotationsachse derart, dass das Kabelende (25) zu einer Trennvorrichtung zeigt;
Festhalten eines zu entfernenden Teils des Kabelendes (25), insbesondere einer Isolation des Kabelendes (25), mittels der Trennvorrichtung; und
Wegbewegen des Kabelendes (25) entlang der Längsrichtung, so dass der zu entfernende Teil von der Trennvorrichtung festgehalten wird und von dem Kabelende (25) getrennt wird.

12. Verfahren nach einem der Ansprüche 7-11, ferner den Schritt umfassend:
Verändern der Höhenposition des Kabelendes (25) mittels einer Höhenpositionseinstellvorrichtung (13) des Kabelhalteelements (15).

## Claims

1. A cable end holding device (1) for holding a cable end (25) of a cable for a crimp process, wherein the cable end holding device (1) comprises the following:
a cable holding element (15) for holding the cable end (25), and a height position changing device comprising two lever elements (10a, 10b) for changing the height position of the cable holding element (15), wherein the lever elements (10a, 10b) are arranged extending parallel to one another along a longitudinal direction of the lever elements (10a, 10b),
wherein the lever elements (10a, 10b) are arranged offset from one another in height and in a width direction perpendicular to the height and perpendicular to the longitudinal direction,
and wherein the lever elements (10a, 10b) are each rotatably supported about a first axis of rotation (30, 31) extending along the width direction, the two first axes of rotation (30, 31) extending parallel to one another, **characterized in that** the height position changing device is decoupled from a movement of a die in the crimping process.

2. The cable holding device (1) according to claim 1, wherein the cable end holding device (1) further comprises a longitudinal position alteration device (11) for changing the position of the cable holding element (15) along the longitudinal direction.

3. The cable end holding device (1) according to claim 1 or claim 2, further comprising a rotation device (14) for rotating the cable holding element (15) and the lever element (10a, 10b) about an axis of rotation extending along the vertical.

4. The cable end holding device (1) according to any of the preceding claims, wherein the vertical position alteration device has a curved disk, in particular an arithmetic spiral (19), and/or an eccentric tappet for changing the vertical position of the cable holding element (15).

5. The cable end holding device (1) according to any of the preceding claims, wherein the cable holding element (15) has a vertical position setting device (13) for altering the vertical position of the cable end (25).

6. A cable assembly machine for assembling a cable, wherein the cable assembly machine comprises a blade for cutting the cable and a cable end holding device for holding a cable end of the cable according to any of the preceding claims.

7. A method for positioning a cable end (25) of a cable by means of a cable end holding device (1) for a crimping process according to claim 1, wherein the cable end holding device (1) has a height position changing device for changing the height position of a cable holding element (15), wherein the height position changing device comprises two lever elements (10a, 10b) extending parallel to one another along the longitudinal direction thereof, and wherein the lever elements (10a, 10b) are each rotatably supported about a first axis of rotation (30, 31) extending along a width direction, the width direction being perpendicular to the height and perpendicular to the longitudinal direction, the method comprising the steps of
- holding the cable end (25) using the cable holding element (15); and
- altering the vertical position of the cable end (25) in a manner decoupled from a movement of a stamp during the crimp process in that the lever elements (10a, 10b) are each rotated about the first axis of rotation (30, 31) thereof.

8. The method according to claim 7, wherein a change in the position of the cable end (25) in the longitudinal direction as a result of a change in the vertical position of the cable end (25) can be compensated by a longitudinal position alteration device (11) in such a way that the position of the cable end (25) in the longitudinal direction substantially does not change.

9. The method according to claim 7 or claim 8, wherein a distance of the cable end (25) from a contact element (26) arranged on an anvil (27) of a press (5) is reduced by the vertical position alteration device for a given time period, synchronously with a distance of a stamp (24) of the press (5) from the contact element (26).

10. The method according to claim 9, wherein before the cable end (25) strikes the contact element (26), the movement speed of the cable end (25) relative to the contact element (26) is reduced, in such a way that the cable end (25) contacts the contact element (26) at a reduced speed.

11. The method according to any of claims 7 - 10, further comprising the steps of:
rotating the cable end (25) about an axis of rotation extending along the height such that the cable end (25) faces a disconnecting device; holding a part of the cable end (25) to be removed, particularly an insulation of the cable end (25), by means of the disconnecting device; and
moving away the cable end (25) along the longitudinal direction, in such a way that the part to be removed is held in place by the cutting device and cut off from the cable end (25).

12. The method according to any of claims 7 - 11, further comprising the step of altering the vertical position of the cable end (25) using a vertical position setting device (13) of the cable holding element (15).

## Revendications

1. Dispositif de maintien d'extrémité de câble (1) permettant de maintenir une extrémité de câble (25) d'un câble pour un processus de sertissage, dans lequel le dispositif de maintien d'extrémité de câble (1) comprend les éléments suivants :
un élément de maintien de câble (15) permettant de maintenir l'extrémité de câble (25), et un dispositif de modification de position en hauteur comportant deux éléments de levier (10a, 10b) permettant de modifier la position en hauteur de l'élément de maintien de câble (15), dans lequel les éléments de levier (10a, 10b) sont disposés de manière à s'étendre parallèlement l'un à l'autre le long d'une direction longitudinale des éléments de levier (10a, 10b), dans lequel les éléments de levier (10a, 10b) sont disposés décalés l'un par rapport à l'autre en hauteur et dans une direction de la largeur perpendiculaire à la hauteur et perpendiculaire à la direction longitudinale, et dans lequel les éléments de levier (10a, 10b) sont montés de manière à pouvoir tourner respectivement autour d'un premier axe de rotation (30, 31) s'étendant le long de la direction de la largeur, dans lequel les deux premiers axes de rotation (30, 31) s'étendent parallèlement l'un à l'autre, **caractérisé en ce que** le dispositif de modification de position en hauteur est désolidarisé d'un mouvement d'un poinçon lors du processus de sertissage.

2. Dispositif de maintien d'extrémité de câble (1) selon la revendication 1, dans lequel le dispositif de maintien d'extrémité de câble (1) comprend en outre un dispositif de modification de position longitudinale (11) permettant de modifier la position de l'élément de maintien de câble (15) le long de la direction longitudinale.

3. Dispositif de maintien d'extrémité de câble (1) selon la revendication 1 ou 2, comprenant en outre un dispositif de rotation (14) permettant de faire tourner l'élément de maintien de câble (15) et les éléments de levier (10a, 10b) autour d'un axe de rotation s'étendant le long de la hauteur.

4. Dispositif de maintien d'extrémité de câble (1) selon l'une des revendications précédentes, dans lequel le dispositif de modification de position en hauteur présente une came, en particulier une spirale arithmétique (19), et/ou un excentrique permettant de modifier la position en hauteur de l'élément de maintien de câble (15).

5. Dispositif de maintien d'extrémité de câble (1) selon l'une des revendications précédentes, dans lequel l'élément de maintien de câble (15) présente un dispositif de réglage de position en hauteur (13) permettant de modifier la position en hauteur de l'extrémité de câble (25).

6. Machine de confection de câbles permettant de confectionner un câble, dans laquelle la machine de confection de câbles comprend une lame permettant de couper le câble et un dispositif de maintien d'extrémité de câble permettant de maintenir une extrémité de câble du câble selon l'une des revendications précédentes.

7. Procédé permettant de positionner une extrémité de câble (25) d'un câble au moyen d'un dispositif de maintien d'extrémité de câble (1) pour un processus de sertissage selon la revendication 1, dans lequel le dispositif de maintien d'extrémité de câble (1) présente un dispositif de modification de position en hauteur permettant de modifier la position en hauteur d'un élément de maintien de câble (15), dans lequel le dispositif de modification de position en hauteur présente deux éléments de levier (10a, 10b) s'étendant parallèlement l'un à l'autre le long de leur direction longitudinale, et dans lequel les éléments de levier (10a, 10b) sont montés de manière à pouvoir tourner respectivement autour d'un premier axe de rotation (30, 31) s'étendant le long d'une direction de la largeur, dans lequel la direction de la largeur est perpendiculaire à la hauteur et perpendiculaire à la direction longitudinale, dans lequel le procédé comprend les étapes suivantes :
- maintien de l'extrémité de câble (25) avec l'élément de maintien de câble (15) ; et
- modification de la position en hauteur de l'extrémité de câble (25) désolidarisée d'un mouvement d'un poinçon lors du processus de sertissage en faisant tourner les éléments de levier (10a, 10b) respectivement autour de leur premier axe de rotation (30, 31).

8. Procédé selon la revendication 7, dans lequel une modification de la position de l'extrémité de câble (25) dans la direction longitudinale sur la base d'une modification de la position en hauteur de l'extrémité de câble (25) est compensée par un dispositif de modification de position longitudinale (11) de manière telle que la position de l'extrémité de câble (25) n'est sensiblement pas modifiée dans la direction longitudinale.

9. Procédé selon la revendication 7 ou 8, dans lequel une distance entre l'extrémité de câble (25) et un élément de contact (26) disposé sur une enclume (27) d'une presse (5) est réduite de manière synchrone avec une distance entre un poinçon (24) de la presse (5) et l'élément de contact (26) au moyen du dispositif de modification de position en hauteur pendant une période de temps prédéterminée.

10. Procédé selon la revendication 9, dans lequel, avant l'impact de l'extrémité de câble (25) sur l'élément de contact (26), la vitesse de déplacement de l'extrémité de câble (25) par rapport à l'élément de contact (26) est réduite, de sorte que l'extrémité de câble (25) entre en contact avec l'élément de contact (26) à une vitesse réduite.

11. Procédé selon l'une des revendications 7 à 10, comprenant en outre les étapes de :
mise en rotation de l'extrémité de câble (25) autour d'un axe de rotation s'étendant le long de la hauteur de manière telle que l'extrémité de câble (25) fait face à un dispositif de séparation ;
retenue d'une partie à enlever de l'extrémité de câble (25), en particulier d'une isolation de l'extrémité de câble (25), au moyen du dispositif de séparation ; et
éloignement de l'extrémité de câble (25) le long de la direction longitudinale de sorte que la partie à enlever est retenue par le dispositif de séparation et est séparée de l'extrémité de câble (25).

12. Procédé selon l'une des revendications 7 à 11, comprenant en outre l'étape de :
modification de la position en hauteur de l'extrémité de câble (25) au moyen d'un dispositif de réglage de position en hauteur (13) de l'élément de maintien de câble (15).
